# EUROPEAN PATENT SPECIFICATION

(11) **EP 3 835 056 B1**
(45) Date of publication and mention of the grant of the patent: **11.09.2024**
(21) Application number: 20212824.5
(22) Date of filing: 09.12.2020
(51) Int. Cl.: B32B 17/10

(54) **METHOD AND MACHINE FOR FORMING A LAMINATED GLASS SEMIFINISHED PRODUCT**
VERFAHREN UND MASCHINE ZUM HERSTELLEN EINES HALBZEUGS AUS VERBUNDGLAS
PROCÉDÉ ET MACHINE POUR LA PRODUCTION D'UN PRODUIT SEMI-FINI EN VERRE FEUILLETÉ

(30) Priority: 09.12.2019 IT 201900023394
(43) Date of publication of application: 16.06.2021
(73) Proprietor: Bottero S.p.A., 12100 Cuneo (IT)
(72) Inventor: TERZUOLO, Pierluigi, 12100 CUNEO (IT); FACCENDA, Aldo, 12100 CUNEO (IT)
(74) Representative: Studio Torta S.p.A.

(56) References cited:
- EP-A1- 2 177 329
- DE-C1- 3 840 843
- US-A1- 2011 119 898

## Description

### TECHNICAL FIELD

The present invention relates to a forming method and to a trimming machine for forming a laminated glass semifinished product for forming a laminated glass sheet.

### BACKGROUND ART

As is known, a laminated glass sheet is obtained starting from a laminated glass semifinished product consisting of two side glass sheets and an intermediate sheet of thermoplastic material interposed between the two side glass sheets. After its forming, the laminated semifinished product is heated so as to make the sheet of thermoplastic material firmly adhere to the glass sheets.

Furthermore, as is known, the laminated semifinished product is obtained starting from a laminated glass assembly by arranging the sheet of thermoplastic material between two side glass sheets. In order to prevent uncovered peripheral zones or zones devoid of the sheet of thermoplastic material, during the forming, the same sheet of thermoplastic material is allowed to protrude beyond the peripheral edges of the side glass sheets, forming peripheral portions or wings. The laminated assembly is then subjected to a trimming operation in which the peripheral protruding portions of the sheet are cut and removed.

The trimming operation is carried out manually by an operator who uses a common knife or cutting blade which is advanced as much as possible in contact with the peripheral edges of the laminated assembly. Manual trimming requires a lot of time and above all experience so as to make precise trimming and is therefore time-consuming and expensive and often not entirely easy due to the large size of the glass sheets.

Alternatively, trimming is carried out automatically by arranging the laminated glass semifinished product flatly on a supporting surface and moving motorised cutting heads around the laminated semifinished product.

The automatic trimming allows reducing trimming timing, but it is not always satisfactory with regard to the reliability and the accuracy of the trimming.

The foregoing is consequent on several factors. First of all, the glass sheets are practically never geometrically and / or dimensionally equal to each other and often they are not even arranged in positions perfectly overlapping each other, hence one of the glass sheets usually has segments that protrude more or less in a cantilever fashion beyond the other glass sheet.
Hence, it is difficult to control the position of the cutting heads in order to prevent the cutting edges of the same cutting heads from sliding in contact with one or the other glass sheet, suddenly wearing out.

In order to obviate such drawback, rollers of reference, generally of plastic material, are associated with the cutting heads, which rollers roll in contact with the sides of both glass sheets, mechanically keeping the cutting edge of the blade spaced from the glass sheets.

The trimming method of the type described above is sufficiently reliable and precise when the glass sheets have a large thickness, since the rollers can rest on relatively extended peripheral surfaces of the glass sheets. The trimming method described above, instead, is not usable or in any case is unsatisfactory in the presence of "thin" glass sheets, i.e. having a thickness of less than a couple of millimetres. In such conditions, it is necessary to use rollers having a very moderate diameter and in any case the side supporting surface of the rollers is minimal. Hence, the laminated glass assemblies having "thin" glass sheets are still manually trimmed.

In addition to this, the automatic trimming method is not usable or in any case is unsatisfactory when the glass sheets are coated glass sheets, for example low-emissivity glass sheets, where the coating layer (low-E) placed on the glass sheet is, by its nature, very delicate and is often damaged by the sliding of the rollers of reference.

US 2011/0119898 A1 discloses a method for trimming a coating layer of an extended external surface of a single glass sheet. DE 38 40 843 C1 discloses a method for forming a laminated glass semi finished product, wherein a peripheral portion of a sheet of thermoplastic material is allowed to protrude beyond the outer peripheral edges of a glass sheet, and trimming said peripheral portion by means of a cutting tool. The width of the glass plates can be measured beforehand and the cutting tools can be placed in the correct position according to the measured width.

### DISCLOSURE OF INVENTION

The object of the present invention is to provide a method for forming a laminated glass semifinished product for forming a laminated glass sheet, which allows solving the problems described above in a simple and cost-effective manner and, in particular, a method which allows trimming the intermediate sheet of thermoplastic material regardless of the geometrical and dimensional characteristics of the side glass sheets, of their thickness and of their relative position.

According to the present invention, a method is provided for forming a laminated glass semifinished product for forming a laminated glass sheet; the method comprising the steps of forming an assembly of laminated glass by interposing a sheet of thermoplastic material between two side glass sheets and allowing at least a peripheral portion of said sheet of thermoplastic material to protrude beyond the outer peripheral edges of said glass sheets, and trimming said peripheral portion by means of a cutting tool; the trimming of said peripheral portion comprising the steps of keeping a cutting edge of said cutting tool spaced from both of the outer peripheral edges of said glass sheets; characterised in that keeping the cutting edge in a position spaced from said peripheral edges comprises the steps of advancing said cutting tool by means of a motorised cart movable in a rectilinear direction; detecting by means of at least an optical detector and during said trimming operation, at least a peripheral segment of the peripheral edge of one of the glass sheets that protrudes in a cantilever fashion beyond the other glass sheet and; generating a corresponding segment position signal; said cutting edge being kept spaced from said peripheral edges by a command and control unit acting on a motorised actuator carried by said motorised cart and in response to the segment position signal received from said optical detector.

The present invention also relates to a trimming machine for forming a laminated glass semifinished product.

According to the present invention, a trimming machine is provided for forming a laminated glass semifinished product, as claimed in claim 8.

### BRIEF DESCRIPTION OF THE DRAWINGS

The invention will now be described with reference to the accompanying figures, which show a non-limiting embodiment example thereof, wherein:
Figure 1 is a partial perspective view of a preferred embodiment of a trimming machine according to the present invention and for carrying out the forming method according to the teachings of the invention;
Figure 2 is a front view, on an enlarged scale and with parts removed for clarity, of the machine of Figure 1;
Figure 3 illustrates, on an enlarged scale, a lefthand portion of the machine of Figure 2;
Figure 4 illustrates a detail of Figure 3 on a greatly enlarged scale; and
Figure 5 schematically illustrates a laminated glass assembly processed on the machine of Figure 1.

### BEST MODE FOR CARRYING OUT THE INVENTION

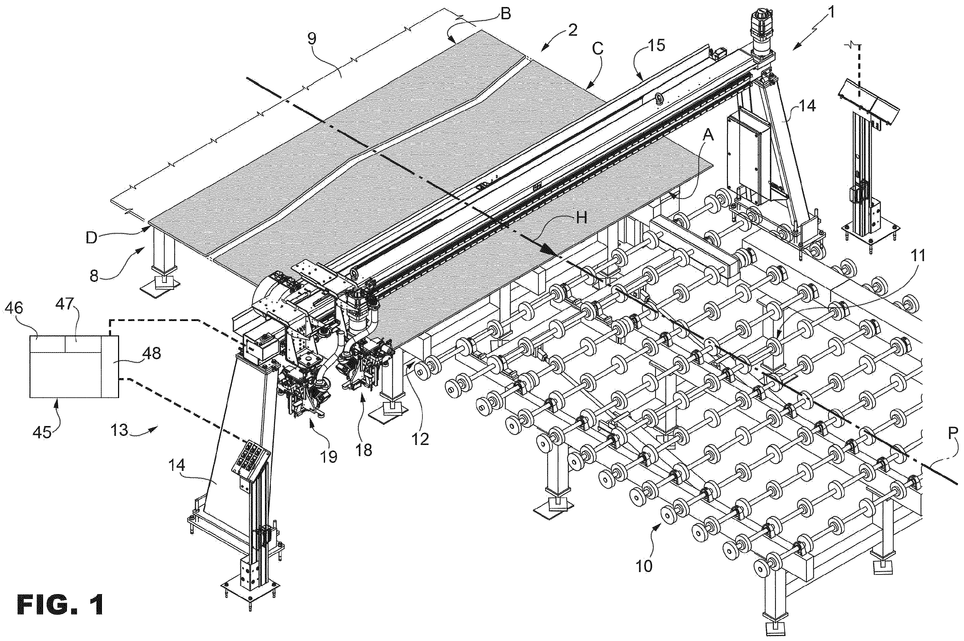

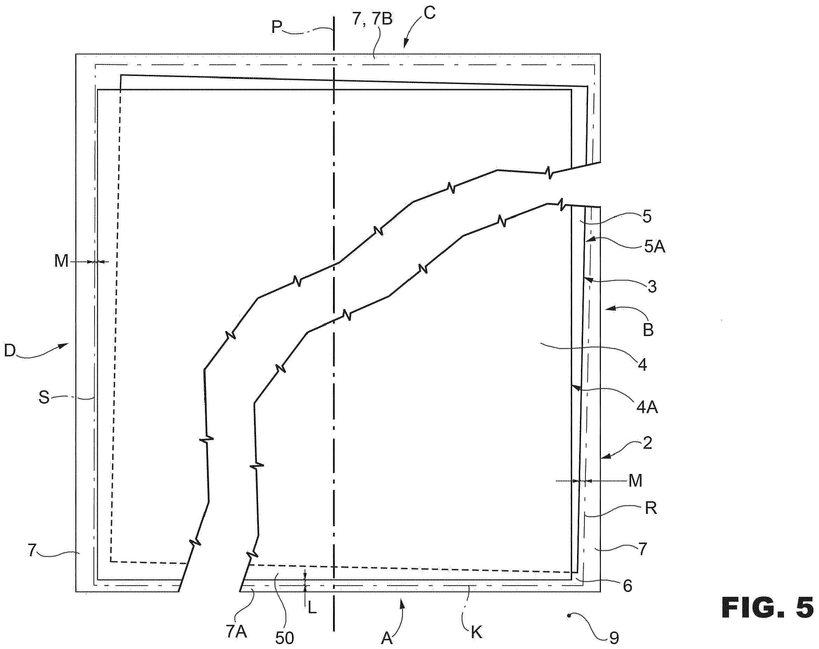

In Figures 1 to 3, reference numeral 1 indicates, as a whole, a trimming machine for trimming a laminated glass assembly 2, illustrated with continuous lines in Figure 5, and forming a laminated glass semifinished product 3, illustrated with a dashed line always in Figure 5.

With reference to Figure 5, the laminated glass assembly 2 comprises two side glass sheets 4 and 5 having respective peripheral edges 4A and 5A, different from each other and a sheet 6 of thermoplastic material arranged between the glass sheets 4 and 5. The sheet 6 has a greater extension than both the glass sheets 4 and 5 such to have one or more peripheral portions 7 which protrude in a cantilever fashion beyond both edges 4A and 5A. In the illustrated example, the portions 7 are joined together.

According to a variant, the peripheral portions 7 are at least partially separated from each other so as to form peripheral wings which extend in a cantilever fashion beyond one or both peripheral edges 4A and 5A.

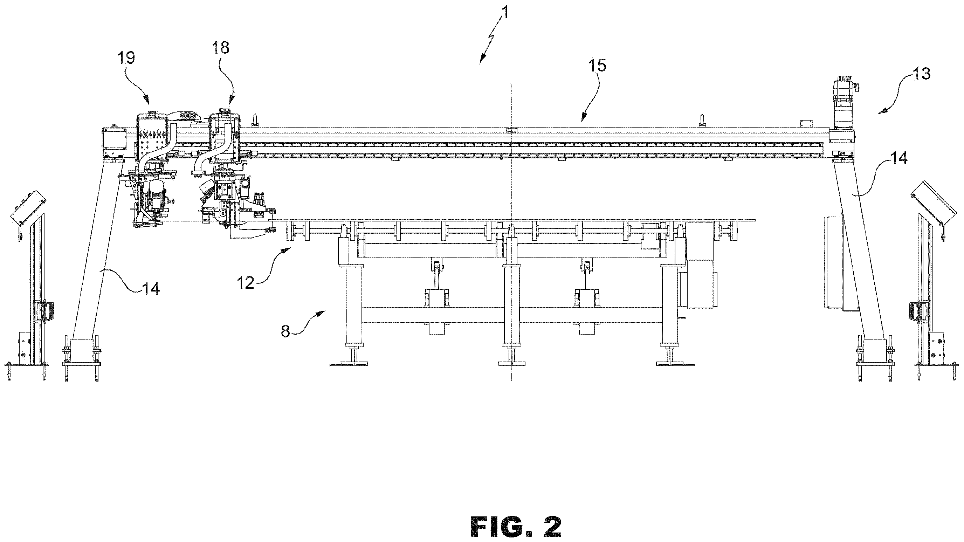

Always with reference to Figure 1 and, in particular, to Figure 2, the machine 1 comprises a motorised inlet conveyor 8, known per se and not described in detail, for example of the type having motorised belts or rollers, which defines a surface 9 for supporting and advancing the laminated assembly 2 along a rectilinear path P.

The machine 1 then comprises an outlet conveyor 10, this also motorised and known per se, arranged along the path P downstream of the conveyor 8 in the direction of advancement H of the assembly 2 and defining a supporting surface 11 for the semifinished product 3. Conveniently, the supporting surface 11 is coplanar with the surface 9 and is horizontal.

Between the two supporting surfaces 9 and 11 and astride a separation zone 12 of the conveyors 8 and 10, the machine 1 comprises a portal frame 13, in turn comprising two uprights 14 arranged on opposite lateral sides of the supporting surfaces 9 and 11 and a crosspiece 15 extending orthogonally to the path P, parallel to the supporting surfaces 9 and 11 and in a raised position with respect to the supporting surfaces 9 and 11.

The crosspiece 15 supports two trimming devices for the intermediate sheet 6 arranged side by side and indicated by 18 and 19.

The device 18 is an orientable device configured to trim the two edges A and B transversal to the path P and the longitudinal edge C of the assembly 2, while the device 19 is provided for trimming the longitudinal edge D of the assembly 2 (Figures 1 and 5).

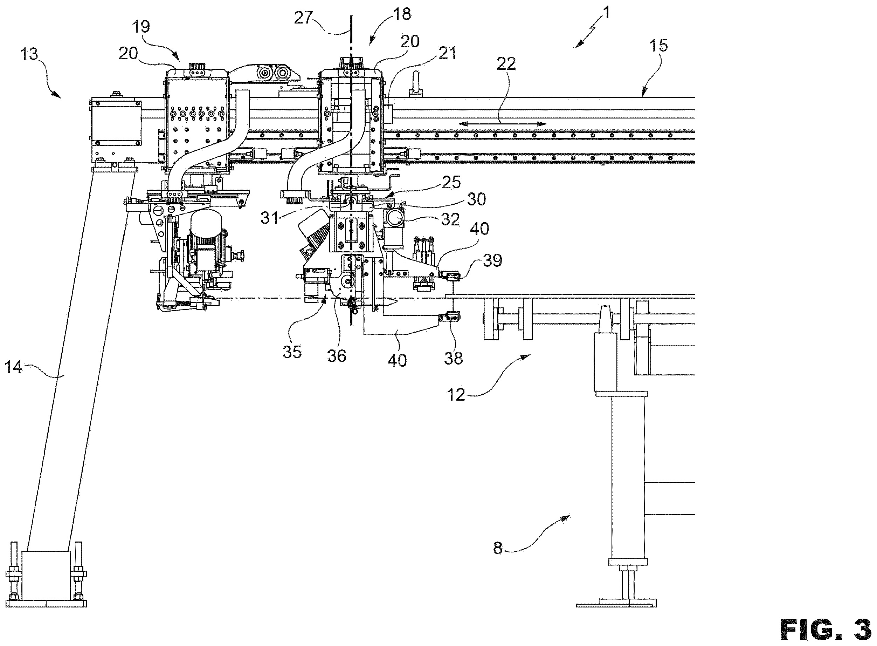

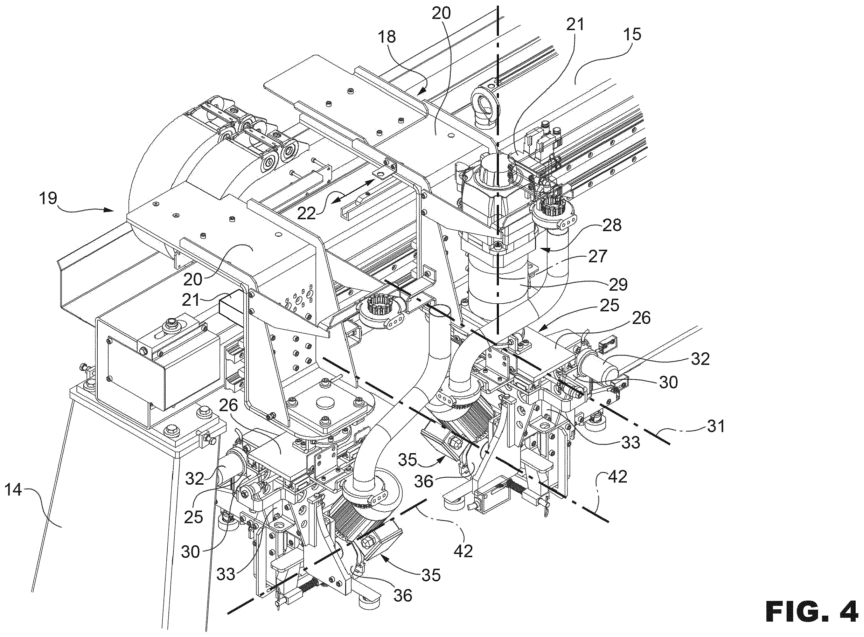

With reference to Figures 3 and 4, the device 18 comprises a cart 20 actuaed by a motor 21 for moving in opposite directions along the crosspiece 15 in a rectilinear direction 22 parallel to the surfaces 9 and 11 and orthogonal to the path P.

The device 18 also comprises a guide and slide assembly 25, a rectilinear guide 26 thereof (Figure 4) is coupled to the cart 20 by means of a hinge for rotating around a vertical axis 27 orthogonal to the surfaces 9 and 11 under the thrust of a rotator 28 comprising an electric motor 29 arranged on board the cart 20.

The guide and slide assembly 25 then comprises a slide 30 slidingly coupled to the guide 26 in a rectilinear direction 31 orthogonal to the direction 22 and to the direction 27 and parallel to the surfaces 9 and 11 under the thrust of an electric motor 32.

The slide 30 carries a firmly connected supporting structure 33, which extends downwards and carries, in turn, a coupled trimming head 35. The trimming head 35 is provided with a motorised cutting blade 36, conveniently a disc blade. Each blade 36 is rotatable about its own axis of rotation parallel to the direction 31 and has a cutting edge for cutting transversely the portion(s) 7 of the thermoplastic sheet 6, as will be better described below.

Still with reference to Figures 3 and 4, the device 18 further comprises a pair of optical detectors, indicated by 38 and 39 (Figure 3).

In the illustrated example, the optical detectors 38 and 39 are carried by the structure 33 and, in particular, are firmly connected to the free ends of respective cantilevered arms 40, the opposite ends thereof are firmly connected to the structure 33. In this manner, the optical detectors 38 and 39 precede the trimming head 35 in the direction of advancement of the trimming head 35 and of the cart 20.

Alternatively, at least one of the arms 40, for example the upper one, is adjustable, i.e. placed at a variable distance from the other arm 40 so as to adjust the distance of the relative optical detector 39 from the supporting surface 9.

According to a variant, the head 35 is slidingly coupled to the structure 33 in a direction 42 parallel to the axis of rotation of the blade 36 under the thrust of a relative linear actuator for moving in opposite directions with respect to the structure itself.

In any case, the optical detectors 38 and 39 are arranged on opposite sides of the supporting surface 9 and, in use, of the sheet 6 of thermoplastic material and are arranged facing the supporting surface 11 for detecting, always in use, the profile of the sheet 4 and of the sheet 5, respectively, and for sending corresponding edge position signals to a control unit 44 of the machine 1.

The device 19 is constructionally identical to the device 18 and the component parts thereof are marked, where possible, by the same reference numerals of the corresponding parts of the device 18. The device 19 differs from the device 18 in that it is devoid of the rotator 28 and in that the relative guide 26 is fixed to the relative cart 20 in a position orthogonal to the guide 26 of the device 18.

According to a variant, the devices 18 and 19 are constructively identical. This allows manufacturing a single device and detecting assemblies whose edge D is not rectilinear.

Again with reference to Figure 1, the unit 45 comprises a receiver block 46 adapted to receive the position signals sent by each pair of detectors 38, 39, and for each pair of detectors 38, 39 a block 47 for comparing and selecting the signals received and a block 48 for controlling the relative motors as a function of the selected signal.

The laminated semifinished product 3 is formed as follows.

Firstly, the laminated glass assembly 2 is formed by interposing the sheet 6 between the sheets 4 and 5. Thereafter, the laminated assembly 2 is arranged on the supporting surface 9 and keeping the trimming devices 18 and 19 at one end of the crosspiece 15 and the device 18 oriented so as to arrange its own optical detectors 38 and 39 on the side of the edge A, as illustrated in Figures 1 and 3, the laminated assembly 2 is advanced along the path P in the direction H until its front edge A is arranged in the zone 12, i.e. in a position such to be detected by the optical detectors 38 and 39.

At this point, keeping the laminated glass assembly 2 and the device 19 stationary, the device 18 is advanced by moving the relative cart 20 in the direction 22 towards the edge C and after setting its blade 36 in rotation. Simultaneously or slightly in advance with respect to the movement of the cart 20, the unit 45 actuates the detectors 38 and 39 of the device 18, which begin to detect in a continuous or discrete manner or, also by points the various segments of the front edge of the glass sheet 5 and, respectively, the various segments of the front edge of the glass sheet 4 and to send corresponding glass sheet edge position signals to the block 46 of the unit 45. Conveniently, each detector 38, 39 detects the mentioned edges of the glass sheets by emitting and directing an optical beam orthogonally to the glass sheets 4, 5. The unit 45 by means of the comparison and selection block 47 compares the signals received with each other, identifies the signal corresponding to the segment of the glass sheet that protrudes in a cantilever fashion with respect to the segment of the other glass sheet, in the specific case the segment 50 of the sheet 4 and controls the electric motor 32 so as to keep the blade 36 tangent or at a predetermined distance L from the edge of the sheet 4 (Figure 5). In this manner, the blade 36 progressively cuts the portion 7A of the sheet 6 along a cutting line indicated by K.

When the detectors 38 and 39 detect the corner (the right one of Figure 5), the unit 45 acting on the motor 29, rotates the guide 26 counterclockwise in Figures 4 and 5, bringing the blade 36 in a position parallel to the longitudinal side C of the laminated assembly 2. At this point, the unit 45 also actuates the device 19, after which the laminated assembly 2 is advanced in the direction H of Figure 1. During the advancement of the assembly 2, the optical detectors 38 and 39 of both devices 18 and 19 detect, in a manner analogous to what described above, the segments of the respective longitudinal edges C and D, transmit respective signals to the unit 45 which in response controls both motors 32 so as to keep both blades 36 tangent or at a determined distance M from the edges of the glass sheets that protrude in a cantilever fashion so as to move the blades 36 along respective longitudinal paths R and S as illustrated in Figure 5.

When the blades 36 reach the rear corners of the assembly 2, the device 19 is stopped and the guide 26 of the device 18 is rotated by a further 90° always counterclockwise, after which also the rear portion 7B is cut by guiding the cutting blade 36 as for the cutting of the front edge A along the line K1.

Once the rear edge has been cut, both devices 18 and 19 are returned to the starting position while the semifinished product 3 thus obtained is advanced into a heating station.

From the foregoing, it is to be understood that the use of the optical detectors 38, 39 allows detecting, on the one hand, the segments of a glass sheet that protrude in a cantilever fashion with respect to the other glass sheet in a simple, precise manner and regardless of the thickness and of the geometry of the glass sheets 4 and 5. On the other hand, the use of the optical detectors 38, 39 allows detecting the segments or edges of the glass sheet protruding in total absence of physical contact with the glass sheets 4 and 5. This is particularly advantageous especially in the presence of coated glass sheets, where it is indispensable to prevent physical contacts with the coating layer.

Finally, the control of the position of the blades 36 as a function of the signals coming from an optical detector allows keeping constant or varying arbitrarily in a simple and fast manner the distance between each blade 36 and the edges of the glass sheets 4, 5 and therefore the overhang of the thermoplastic material increasing the operating life of the blade 36 and the quality of the trimming regardless of the geometry of the edges of the glass sheets.

From the foregoing it is to be understood that modifications and variants can be made to the described machine 1 without thereby departing from the scope of protection defined by the independent claim.

In particular, in the machine 1, the trimming device 19 could be devoid of the relative optical detectors 38 and 39, in the cases wherein along the longitudinal edge D of the assembly the glass sheets 4 and 5 have peripheral edges perfectly overlapping each other.

In addition to this, one or both trimming devices 18, 19 could comprise a single optical detector 38, 39 arranged above or below the supporting surface 11 but always in a position such to be able to detect the edge of that glass sheet which protrudes in a cantilever fashion beyond the edge of the other glass sheet.
Such solution finds advantageous application, for example, in the cases wherein the thermoplastic sheet 6 is permeable to the light beam emitted by the optical detector 37, 38 since it allows simplifying and reducing the cost of the trimming device(s) 18, 19.

Finally, in one or both devices 18, 19, the cutting blade 36 could be replaced with another cutting tool, for example a thread-like element or a laser beam. In the latter case, the device 18 would be simplified.

## Claims

1. A method for forming a laminated glass semifinished product for forming a laminated glass sheet; the method comprising the steps of forming an assembly (2) of laminated glass by interposing a sheet of thermoplastic material (6) between two side glass sheets (4) (5) and allowing at least a peripheral portion (7) of said sheet of thermoplastic material (6) to protrude beyond the outer peripheral edges (4A)(5A) of said glass sheets (4)(5), and trimming said peripheral portion by means of a cutting tool (36); the trimming of said peripheral portion (4A)(5A) comprising the steps of keeping a cutting edge of said cutting tool (36) spaced from both of the outer peripheral edges (4A) (5A) of said glass sheets (4) (5); **characterised in that** keeping the cutting edge in a position spaced from said peripheral edges (4A) (5A) comprises the steps of advancing said cutting tool (36) by means of a motorised cart (20) movable in a rectilinear direction (22); detecting by means of at least an optical detector (38)(39) and during said trimming operation, at least a peripheral segment of the peripheral edge of one of the glass sheets (4) (5) that protrudes in a cantilever fashion beyond the other glass sheet (4)(5) and; generating a corresponding segment position signal; said cutting edge being kept spaced from said peripheral edges (4A) (5A) by a command and control unit (45) acting on a motorised actuator (32) carried by said motorised cart (20) and in response to the segment position signal received from said optical detector (38) (39) .

2. The method according to claim 1, **characterised in that** the detection of said peripheral segment by means of said optical detector (38)(39) is a continuous detection.

3. The method according to claim 1, **characterised in that** the detection of said peripheral segment by means of said optical detector (38) (39) is a discrete or point detection.

4. The method according to any one of the preceding claims, **characterised in that** the detection of said segments is carried out by keeping said optical detector (38) (39) arranged always on the same side of said sheet of thermoplastic material (6).

5. The method according to any one of the preceding claims, **characterised in that** the detection of at least said peripheral segment is carried out by using two of said optical detectors (38)(39) arranged on opposite sides of said laminated assembly (2) and, with one of said optical detectors, detecting the peripheral edge of one of said glass sheets and, with the other of the optical detectors, detecting the peripheral edge of the other glass sheet (4) (5); said control unit (45) being configured to select from among the two position signals, received from the two optical detectors (38) (39), the signal corresponding to the peripheral edge of the glass sheet that protrudes in a cantilever fashion beyond the peripheral edge of the other glass sheet and to vary the distance (L) (M) of said cutting edge with reference to the selected position signal.

6. The method according to any one of the preceding claims, **characterised in that** the detection operations of said peripheral segment are carried out by directing a light beam orthogonally to said glass sheets (4)(5).

7. The method according to any one of the preceding claims, **characterised in that** the continuous or point detection is carried out for the entire peripheral edge of both of said glass sheets (4)(5).

8. A trimming machine (1) for forming a laminated glass semifinished product starting from an assembly of laminated glass (2) comprising two side glass sheets (4)(5) and an intermediate sheet of thermoplastic material (6) having at least a peripheral portion (7) protruding beyond the outer peripheral edges (4A)(5A) of the glass sheets (4) (5); the machine (1) comprising at least a motorised cart (20) movable in a first rectilinear direction (22), a cutting tool (36) having a cutting edge and means for advancing said cutting tool to the outside of said glass sheets for trimming said peripheral portion, and means for positioning said cutting edge with respect to said glass sheets (4) (5), for moving the cutting edge to a second direction (31) orthogonal to said first direction (22) to space the cutting edge from the outer peripheral edges (4A)(5A) of both of said glass sheets (4A) (5A); **characterised in that** the advancing means comprise said motorised cart (20) movable in a first rectilinear direction (22) and **in that** said positioning means comprise a motorised actuator (32) for moving said cutting tool (36) with respect to said motorized cart (20) in a second rectilinear direction (31) orthogonal to the first direction (22), at least one optical detector (38)(39) carried by said motorised cart (20) for detecting the position of at least one peripheral segment of the peripheral edge (4A)(5A) of one of the glass sheets (4)(5) that protrudes in a cantilever fashion beyond the other glass sheet (4)(5), and a command and control unit (45) configured to control said motorised actuator (32) in response to the position signal received from said optical detector (38)(39).

9. The machine according to claim 8, **characterised in that** it comprises motorised rotation means (28) for rotating said optical detector (38)(39) and said cutting tool (36) with respect to said cart around the hinge axis (27) orthogonal to said rectilinear directions (22)(31).

10. The machine according to claim 8 or 9, **characterised in that** it has a supporting surface (9) for said assembly (2) of laminated glass and **in that** said optical detector (38)(39) is arranged facing said supporting surface (9) and configured to send a light beam towards a supporting surface (9).

11. The machine according to claim 10, **characterised in that** said positioning means comprise two optical detectors (38) (39) arranged on opposite sides of said supporting surface (9) and each being configured to detect at least a segment of a peripheral edge (4A) (5A) of a respective glass sheet (4)(5) and to send respective segment position signals to said control unit (45); said control unit (45) comprising a comparison and selection block (47) configured to select, from among the two segment position signals received, the signal relative to the peripheral edge of the glass sheet that protrudes in a cantilever fashion beyond the peripheral edge of the other glass sheet and command means (48) for said motorised actuator (32) for moving said cutting edge with respect to the supporting surface (9) in said second direction (31) and as a function of the position signal selected.

12. The machine according to any one of the claims from 8 to 11, **characterised in that** said optical detector (38)(39) is arranged in an advanced position with respect to the relative cutting tool (36) in the advancing direction of said cutting tool (36).

## Patentansprüche

1. Ein Verfahren zum Erzeugen eines Verbundglas- Halbfabrikats zum Erzeugen einer Verbundglasscheibe; wobei das Verfahren die folgenden Schritte aufweist:
Erzeugen einer Anordnung (2) aus Verbundglas durch Einlegen einer Scheibe aus thermoplastischem Material (6) zwischen zwei Seiten-Glasscheiben (4) (5) und Ermöglichen, dass mindestens ein peripherer Bereich (7) der Scheibe aus thermoplastischem Material (6) über den äußeren Bereich (4A) (5A) der Glasscheiben (4) (5) hinausragt, und
das Trimmen des peripheren Bereichs mittels eines Schneidwerkzeugs (36); wobei das Trimmen des peripheren Bereichs (4A) (5A) die Schritte aufweist, eine Schneidkante des Schneidwerkzeugs (36) von beiden äußeren peripheren Kanten (4A) (5A) der Glasscheiben (4) (5) beabstandet zu halten;
**dadurch gekennzeichnet, dass**
das Halten der Schneidkante in einer von den peripheren Kanten (4A) (5A) beabstandeten Position die folgenden Schritte aufweist Vorwärtsbewegen des Schneidwerkzeugs (36) mit Hilfe eines motorisierten Wagens (20), der in einer geradlinigen Richtung (22) beweglich ist;
Erfassen mittels mindestens eines optischen Detektors (38) (39) und während des Trimmens, mindestens ein peripheres Segment der peripheren Kante einer der Glasscheiben (4) (5), das freitragend über die andere Glasscheibe (4) (5) hinausragt, und;
Erzeugen eines entsprechenden Segmentpositionssignals; wobei die Schneidekante von den peripheren Kanten (4A) (5A) durch eine Befehls- und Steuereinheit (45) beabstandet gehalten wird, die auf einen motorisierten Aktuator (32) einwirkt, der von dem motorisierten Wagen (20) getragen wird, und in Reaktion auf das von dem optischen Detektor (38) (39) empfangene Segmentpositionssignal.

2. Das Verfahren nach Anspruch 1, **dadurch gekennzeichnet, dass** die Erfassung des peripheren Segments mit Hilfe des optischen Detektors (38) (39) eine kontinuierliche Erfassung ist.

3. Das Verfahren nach Anspruch 1, **dadurch gekennzeichnet, dass** die Erfassung des peripheren Segments durch den optischen Detektor (38) (39) eine diskrete oder punktuelle Erfassung ist.

4. Das Verfahren nach einem der vorangehenden Ansprüche, **dadurch gekennzeichnet, dass** die Erfassung der Segmente dadurch erfolgt, dass der optische Detektor (38) (39) immer auf der gleichen Seite der Scheibe aus thermoplastischem Material (6) angeordnet ist.

5. Das Verfahren nach einem der vorangehenden Ansprüche, **dadurch gekennzeichnet, dass**
die Erfassung mindestens des peripheren Segments unter Verwendung von zwei der optischen Detektoren (38) (39) erfolgt, die auf gegenüberliegenden Seiten der Anordnung (2) angeordnet sind, und mit einem der optischen Detektoren die periphere Kante einer der Glasscheiben und mit dem anderen der optischen Detektoren die periphere Kante der anderen Glasscheibe (4) (5) erfasst wird,
wobei die Steuereinheit (45) ausgebildet ist, um aus den beiden von den beiden optischen Detektoren (38) (39) empfangenen Positionssignalen das Signal auszuwählen, das der peripheren Kante der Glasscheibe entspricht, die freitragend über die periphere Kante der anderen Glasscheibe hinausragt, und um den Abstand (L) (M) der Schneidkante in Bezug auf das ausgewählte Positionssignal zu verändern.

6. Ein Verfahren nach einem der vorangehenden Ansprüche, **dadurch gekennzeichnet, dass** die Erkennungsvorgänge des peripheren Segments durch orthogonales Richten eines Lichtstrahls auf die Glasscheiben (4) (5) durchgeführt werden.

7. Ein Verfahren nach einem der vorangehenden Ansprüche, **dadurch gekennzeichnet, dass** die kontinuierliche oder punktuelle Detektion für die gesamte periphere Kante der beiden Glasscheiben (4) (5) durchgeführt wird.

8. Maschine (1) zum Erzeugen eines Verbundglas- Halbfabrikats ausgehend von einer Anordnung (2) aus Verbundglas, die zwei Seiten-Glasscheiben (4) (5) und eine Zwischenscheibe aus thermoplastischem Material (6) aufweist, die mindestens einen peripheren Bereich (7) hat, der über die äußeren peripheren Kanten (4A) (5A) der Glasscheiben (4) (5) hinausragt;
wobei die Maschine (1) aufweist
mindestens einen motorisierten Wagen (20), der in einer ersten geradlinigen Richtung (22) beweglich ist, ein Schneidwerkzeug (36) mit einer Schneidkante und Mittel zum Vorwärtsbewegen des Schneidwerkzeugs zur Außenseite der Glasscheiben, um den peripheren Bereich zu trimmen, und
Mittel zum Positionieren der Schneidkante in Bezug auf die Glasscheiben (4) (5), um die Schneidkante in eine zweite Richtung (31) orthogonal zu der ersten Richtung (22) zu bewegen, um die Schneidkante von den äußeren peripheren Kanten (4A) (5A) der beiden Glasscheiben (4A) (5A) zu beabstanden;
**gekennzeichnet**
**dadurch, dass** die Vorschubmittel den motorisierten Wagen (20) aufweisen, der in einer ersten geradlinigen Richtung (22) beweglich ist, und
dadurch, dass die Positionierungsmittel einen motorisierten Aktuator (32) aufweisen, um das Schneidwerkzeug (36) in Bezug auf den motorisierten Wagen (20) in einer zweiten geradlinigen Richtung (31) orthogonal zur ersten Richtung (22) zu bewegen,
durch mindestens einen optischen Detektor (38) (39), der von dem motorisierten Wagen (20) getragen wird, um die Position von mindestens einem peripheren Segment der peripheren Kante (4A) (5A) einer der Glasscheiben (4) (5) zu erfassen, die freitragend über die andere Glasscheibe hinausragt, und
durch eine Befehls- und Steuereinheit (45), die ausgebildet ist, um den motorisierten Aktuator (32) in Reaktion auf das von dem optischen Detektor (38) (39) empfangene Positionssignal zu regeln.

9. Die Maschine nach Anspruch 8, **dadurch gekennzeichnet, dass** sie motorisierte Rotationsmittel (28) aufweist, um den optischen Detektor (38) (39) und das Schneidwerkzeug (36) in Bezug auf den Wagen um die Gelenkachse (27) orthogonal zu den geradlinigen Richtungen (22) (31) zu drehen.

10. Die Maschine nach Anspruch 8 oder 9, **dadurch gekennzeichnet, dass** sie eine Stützfläche (9) für die Anordnung (2) aus Verbundglas aufweist und dass der optische Detektor (38) (39) der Stützfläche (9) gegenüberliegend angeordnet und ausgebildet ist, um einen Lichtstrahl auf eine Stützfläche (9) zu richten.

11. Die Maschine nach Anspruch 10, **dadurch gekennzeichnet, dass**
die Positionierungsmittel zwei optische Detektoren (38) (39) aufweisen, die auf gegenüberliegenden Seiten der Stützfläche (9) angeordnet sind und jeweils ausgebildet sind, um mindestens ein Segment einer peripheren Kante (4A) (5A) einer entsprechenden Glasscheibe (4) (5) zu erfassen und entsprechende Segmentpositionssignale an die Steuereinheit (45) zu senden;
wobei die Steuereinheit (45) einen Vergleichs- und Auswahlblock (47) aufweist, der so ausgebildet ist, dass er aus den beiden empfangenen Segmentpositionssignalen das Signal auswählt, das sich auf die periphere Kante der Glasscheibe bezieht, die freitragend über die periphere Kante der anderen Glasscheibe hinausragt, und eine Steuer- und Regeleinrichtung (48) für den motorisierten Aktuator (32) zum Bewegen der Schneidkante in Bezug auf die Stütze (9) in der zweiten Richtung (31) und in Abhängigkeit von dem ausgewählten Positionssignal.

12. Die Maschine nach einem der Ansprüche 8 bis 11, **dadurch gekennzeichnet, dass** der optische Detektor (38) (39) in einer vorgeschobenen Position in Bezug auf das relative Schneidwerkzeug (36) in der Vorschubrichtung des Schneidwerkzeugs (36) angeordnet ist.

## Revendications

1. Procédé pour le formage d'un produit semi-fini en verre feuilleté destiné à mettre en forme une feuille de verre feuilleté ; le procédé comprenant les étapes consistant à mettre en forme un ensemble (2) de verre feuilleté en interposant une feuille de matériau thermoplastique (6) entre deux feuilles de verre latérales (4)(5) et en laissant au moins une partie périphérique (7) de ladite feuille de matériau thermoplastique (6) dépasser les bords périphériques extérieurs (4A)(5A) desdites feuilles de verre (4)(5), et à ébarder ladite partie périphérique à l'aide d'un outil de coupe (36) ; l'ébardage de ladite partie périphérique (4A)(5A) comprenant les étapes consistant à maintenir un bord de coupe dudit outil de coupe (36) espacé des deux bords périphériques extérieurs (4A)(5A) desdites feuilles de verre (4)(5) ; **caractérisé en ce que** le maintien du bord de coupe dans une position espacée desdits bords périphériques (4A)(5A) comprend les étapes consistant à faire avancer ledit outil de coupe (36) au moyen d'un chariot motorisé (20) mobile dans une direction rectiligne (22) ; à détecter au moyen d'au moins un détecteur optique (38)(39) et pendant ladite opération d'ébardage, au moins un segment périphérique du bord périphérique de l'une des feuilles de verre (4)(5) qui dépasse en porte-à-faux l'autre feuille de verre (4)(5) et ; à produire un signal de position de segment correspondant ; ledit bord de coupe étant maintenu espacé desdits bords périphériques (4A)(5A) par une unité de commande et de contrôle (45) agissant sur un actionneur motorisé (32) porté par ledit chariot motorisé (20) et en réponse au signal de position de segment reçu dudit détecteur optique (38)(39).

2. Procédé selon la revendication 1, **caractérisé en ce que** la détection dudit segment périphérique au moyen dudit détecteur optique (38)(39) est une détection continue.

3. Procédé selon la revendication 1, **caractérisé en ce que** la détection dudit segment périphérique au moyen dudit détecteur optique (38)(39) est une détection discrète ou ponctuelle.

4. Procédé selon l'une quelconque des revendications précédentes, **caractérisé en ce que** la détection desdits segments est réalisée en maintenant ledit détecteur optique (38)(39) disposé toujours du même côté de ladite feuille de matière thermoplastique (6).

5. Procédé selon l'une quelconque des revendications précédentes, **caractérisé en ce que** la détection d'au moins ledit segment périphérique est réalisée en utilisant deux desdits détecteurs optiques (38)(39) disposés sur des côtés opposés dudit ensemble feuilleté (2) et, avec l'un desdits détecteurs optiques, en détectant le bord périphérique de l'une desdites feuilles de verre et, avec l'autre des détecteurs optiques, en détectant le bord périphérique de l'autre feuille de verre (4)(5) ; ladite unité de contrôle (45) étant configurée pour sélectionner parmi les deux signaux de position, reçus des deux détecteurs optiques (38)(39), le signal correspondant au bord périphérique de la feuille de verre qui dépasse en porte-à-faux le bord périphérique de l'autre feuille de verre et pour faire varier la distance (L)(M) dudit bord de coupe en référence au signal de position sélectionné.

6. Procédé selon l'une quelconque des revendications précédentes, **caractérisé en ce que** les opérations de détection dudit segment périphérique sont réalisées en dirigeant un faisceau lumineux orthogonalement auxdites feuilles de verre (4)(5).

7. Procédé selon l'une quelconque des revendications précédentes, **caractérisé en ce que** la détection continue ou ponctuelle est réalisée sur l'ensemble du bord périphérique des deux dites feuilles de verre (4)(5).

8. Machine d'ébardage (1) destinée à mettre en forme un produit semi-fini en verre feuilleté à partir d'un ensemble de verre feuilleté (2) comprenant deux feuilles de verre latérales (4)(5) et une feuille intermédiaire de matériau thermoplastique (6) ayant au moins une partie périphérique (7) dépassant les bords périphériques extérieurs (4A)(5A) des feuilles de verre (4)(5) ; la machine (1) comprenant au moins un chariot motorisé (20) mobile dans une première direction rectiligne (22), un outil de coupe (36) ayant un bord de coupe et un moyen pour faire avancer ledit outil de coupe vers l'extérieur desdites feuilles de verre destiné à ébarder ladite partie périphérique, et un moyen destiné à positionner ledit bord de coupe par rapport auxdites feuilles de verre (4)(5), à déplacer le bord de coupe dans une seconde direction (31) orthogonale à la première direction (22) afin d'espacer le bord de coupe des bords périphériques extérieurs (4A)(5A) des deux dites feuilles de verre (4A)(5A) ; **caractérisée en ce que** le moyen d'avancement comprend ledit chariot motorisé (20) mobile dans une première direction rectiligne (22) et **en ce que** ledit moyen de positionnement comprend un actionneur motorisé (32) destiné à déplacer ledit outil de coupe (36) par rapport audit chariot motorisé (20) dans une seconde direction rectiligne (31) orthogonale à la première direction (22), au moins un détecteur optique (38)(39) porté par ledit chariot motorisé (20) destiné à détecter la position d'au moins un segment périphérique du bord périphérique (4A)(5A) d'une des feuilles de verre (4)(5) qui dépasse en porte-à-faux l'autre feuille de verre (4)(5), et une unité de commande et de contrôle (45) configurée pour contrôler ledit actionneur motorisé (32) en réponse au signal de position reçu dudit détecteur optique (38)(39).

9. Machine selon la revendication 8, **caractérisée en ce que** qu'elle comprend un moyen de rotation motorisé (28) destiné à faire tourner ledit détecteur optique (38)(39) et ledit outil de coupe (36) par rapport audit chariot autour de l'axe d'articulation (27) orthogonal auxdites directions rectilignes (22)(31).

10. Machine selon la revendication 8 ou 9, **caractérisée en ce que** qu'elle présente une surface d'appui (9) pour ledit ensemble (2) de verre feuilleté et **en ce que** ledit détecteur optique (38)(39) est disposé en regard de ladite surface d'appui (9) et configuré pour envoyer un faisceau lumineux en direction d'une surface d'appui (9).

11. Machine selon la revendication 10, **caractérisée en ce que** ledit moyen de positionnement comprend deux détecteurs optiques (38)(39) disposés sur des côtés opposés de ladite surface d'appui (9) et chacun étant configuré pour détecter au moins un segment d'un bord périphérique (4A)(5A) d'une feuille de verre respective (4)(5) et pour envoyer des signaux de position de segment respectifs à ladite unité de contrôle (45) ; ladite unité de contrôle (45) comprenant un bloc de comparaison et de sélection (47) configuré pour sélectionner, parmi les deux signaux de position de segment reçus, le signal relatif au bord périphérique de la feuille de verre qui dépasse en porte-à-faux le bord périphérique de l'autre feuille de verre et un moyen de commande (48) dudit actionneur motorisé (32) destiné à déplacer ledit bord de coupe par rapport à la surface d'appui (9) dans ladite seconde direction (31) et en fonction du signal de position sélectionné.

12. Machine selon l'une quelconque des revendications de 8 à 11, **caractérisée en ce que** ledit détecteur optique (38)(39) est disposé dans une position avancée par rapport à l'outil de coupe relatif (36) dans la direction d'avancement dudit outil de coupe (36).
